# FASCICULE DE BREVET EUROPEEN

(11) **EP 3 388 316 B1**
(45) Date de publication et mention de la délivrance du brevet: **29.12.2021**
(21) Numéro de dépôt: 18165677.8
(22) Date de dépôt: 04.04.2018
(51) Int. Cl.: B62D 29/00, B62D 25/20, B29C 45/14, B62D 43/10, B62D 25/08, B29K 705/00, B29L 31/30

(54) **PIÈCE MOULÉE POLYMÈRE POUR ASSEMBLAGE SUR UNE ARMATURE MÉTALLIQUE ET PROCÉDÉ DE FABRICATION ASSOCIÉ, D'UNE STRUCTURE DE CAISSE DE VÉHICULE AUTOMOBILE**
POLYMER-FORMTEIL ZUM ZUSAMMENBAU AUF EINEM METALLRAHMEN UND VERFAHREN ZUR HERSTELLUNG FAHRZEUG-KÖRPERSTRUKTURS
POLYMER MOLDED PART FOR ASSEMBLY ON A METALLIC FRAME AND METHOD OF MANUFACTURING THE SAME, OF A VEHICLE BODY STRUCTURE

(30) Priorité: 10.04.2017 FR 1753086
(43) Date de publication de la demande: 17.10.2018
(73) Titulaire: RENAULT s.a.s., 92100 Boulogne-Billancourt (FR)
(72) Inventeur: JAUNASSE, Phillipe, 75015 Paris (FR)

(56) Documents cités:
- WO-A1-2017/037171
- DE-C1- 19 540 821

## Description

L'invention a pour objet l'intégration à une structure de caisse automobile, de pièces surfaciques ou de pièces coques, présentant par exemple une géométrie de type "forme emboutie en tôle".

De telles pièces peuvent former des coques structurelles, des planchers ou des bacs de stockage, et peuvent typiquement s'étendre transversalement à une structure de caisse automobile, par exemple pour former un bac de logement de roue de secours.

Dans un souci d'allégement des véhicules, on cherche à remplacer des pièces, conçues initialement comme des pièces en tôle emboutie, par des pièces réalisées en matériau polymère.

Il faut alors choisir un mode d'assemblage compatible à la fois avec la pièce polymère et avec la structure métallique environnante.

Le document WO 2017/037171A1 décrit une pièce moulée en matière polymère, la pièce comprenant une zone d'assemblage destinée à être solidarisée avec une structure support, la zone d'assemblage comportant un insert métallique de fixation à la structure support.

L'ensemble assemblé, juxtaposant polymère et métal, doit parfois pouvoir supporter un passage à haute température. Ce cycle de température peut être imposé à l'ensemble de la structure de caisse, afin de cuire les traitements protecteurs contre la corrosion, par exemple des traitements de type cataphorèse. L'organisation de l'atelier peinture peut amener à effectuer de tels traitements une fois la pièce polymère assemblée sur la structure. Dans certains cas, l'assemblage doit être apte à subir des traitements thermochimiques à des températures supérieures à 100° et fréquemment supérieures à 150°C.

L'invention a pour but de proposer une conception de pièce polymère, et une méthode d'assemblage de cette pièce, qui permettent d'assembler une pièce polymère à une structure de caisse métallique. On souhaite pouvoir assembler y compris des pièces polymères de grandes dimensions.

A cette fin, il est proposé de réaliser une pièce moulée en matière polymère, la pièce comportant au moins une portion de zone plane d'assemblage destinée à être solidarisée avec une structure support, par exemple à une structure métallique. La pièce peut être par exemple réalisée par injection de matière polymère.

La portion de zone plane d'assemblage comporte une pastille métallique intégrée par exemple par surmoulage, dans l'épaisseur de la portion de zone plane d'assemblage, de manière à recouvrir la circonférence de la pastille par le matériau polymère de la pièce moulée, et de manière à laisser apparente une portion centrale de chacune des deux faces de la pastille.

De manière préférentielle, sur la circonférence de la pièce moulée, une portion de chacune des deux faces de la pastille est recouverte par le matériau de la pièce moulée. Par exemple la pièce peut être obtenue par surmoulage de la ou des pastilles.

Selon un autre mode de réalisation, une pastille en forme de coupelle peut être insérée dans un orifice dédié de la zone plane d'assemblage après moulage de la pièce, une seule face de la circonférence de la coupelle étant alors masquée par les bords de l'orifice.

La pastille forme une zone apte à un assemblage de type soudage métal sur métal, ou apte pour d'autres méthodes connues d'assemblage métal sur métal.

De préférence, une forme sensiblement circulaire de la pastille permet d'équilibrer les forces exercées sur la pastille par le matériau formant la pièce polymère, notamment le "frettage" induit par le retrait de moulage du polymère.

Avantageusement, la pastille présente une symétrie de révolution, de manière à pouvoir être positionnées simplement, par centrage, dans le moule dans lequel est injectée la pièce.

Selon un mode de réalisation préféré, la pastille présente une forme de coupelle.

Le fond de la coupelle peut par exemple se trouver dans un même plan, ou peut par exemple se trouver en relief, par rapport à la surface polymère de la pièce maintenant la périphérie de la pastille.

La pastille peut ainsi venir en appui franc sur une portion plane de la structure métallique sur laquelle elle peut être par exemple soudée.

Avantageusement, la périphérie de la pastille est surmoulée entre une première épaisseur de polymère sur une face, et une deuxième épaisseur de polymère sur l'autre face, la première épaisseur de polymère et la deuxième épaisseur de polymère étant avantageusement comprises chacune entre 0,7 et 1,2 fois l'épaisseur moyenne de la pièce mesurée et moyennée sur les zones non surmoulées et non nervurées de la pièce.

A ces épaisseurs de surmoulage s'ajoute l'épaisseur de la pastille, si bien que l'épaisseur totale de la pièce autour des portions nues de la pastille peut être avantageusement supérieure à au moins 2 fois l'épaisseur moyenne du reste de la pièce.

La portion polymère surmoulée peut être mise en appui par exemple sur un support métallique, sur lequel la pastille peut être assemblée par des moyens connus, tels que le soudage ou le rivetage. La pastille peut être pleine en son centre, en vue d'un assemblage de type soudage, ou peut être percée sur sa portion non surmoulée, en vue par exemple d'un assemblage de type vissage.

Le diamètre minimal "accessible" (non surmoulé) des pastilles peut être par exemple compris entre 10 et 40 mm, avantageusement être compris entre 15mm et 30mm. Le diamètre total des pastilles avant leur intégration à la pièce peut être typiquement compris entre 115% et 125% du diamètre minimal accessible. Le diamètre minimal accessible peut correspondre sensiblement au diamètre du fond de la coupelle quand la pastille présente une forme de coupelle.

La pastille peut être avantageusement d'épaisseur constante, ce qui facilite sa fabrication. L'épaisseur de la pastille est avantageusement similaire à l'épaisseur de la structure sur laquelle elle est prévue pour être soudée (par exemple comprise entre 0,7 et 1,5 fois l'épaisseur de la structure support à l'endroit du soudage).

De manière préférentielle, la coupelle comporte un fond d'appui plan, orienté de manière à ce qu'en position de montage de la pièce moulée, le fond d'appui plan de la coupelle vienne en appui sur la structure support.

Lors du moulage de la pièce polymère, sur la face de la pièce destinée à être placée du côté opposé à la structure support, la coupelle reste de préférence dégagée de la pièce moulée sur un diamètre supérieur ou égal au diamètre du fond d'appui plan de la coupelle.

La coupelle peut comporter par exemple un fond plan, entourée d'une couronne plane parallèle au fond, destinée à être noyée dans le polymère lors du surmoulage.

Le fond et la couronne peuvent être reliés par une paroi s'évasant à partir du fond de la coupelle.

La pièce peut former une coque support ou peut former une coque d'habillage.

La coque peut comporter une bande de bord conçue pour être assemblée à la structure support. La bande de bord peut comporter au moins deux desdites pastilles métalliques. Grâce à la bande de bord munie d'un alignement de pastilles métallique, on peut mettre en œuvre des techniques d'assemblages connues utilisées pour assembler par exemple des pièces de tôle métallique, telles qu'un assemblage par soudage par points.

Avantageusement, la bande de bord comprend un alignement de pastilles situées sensiblement à une même distance d'un bord libre de la pièce moulée.

On peut également envisager des coques comportant une ou plusieurs pastilles, intégrées à la pièce en des zones localement planes de la coque mais non situées au bord de la coque. La coque peut ainsi être assemblée à une structure support en étant maintenue en d'autres points que ses seuls bords, ou maintenue par une portion centrale de la coque.

Dans certains modes de réalisation, la pastille peut être gauche, et peut être intégrée par exemple à une zone d'assemblage de la pièce qui forme une surface réglée, et qui est conçue pour être assemblée sur une portion de surface réglée de la structure support.

La structure support peut être avantageusement une structure métallique comportant une ou plusieurs feuillures métalliques conçues pour y appuyer un ou plusieurs bandes de bord de la pièce, et pour les fixer à l'aide des pastilles.

La pièce moulée peut comporter au moins une bande de bord à laquelle sont intégrées au moins une première et au moins une deuxième desdites pastilles métalliques.

La bande de bord peut présenter, avantageusement, une épaisseur amincie le long d'une ligne de réduction d'épaisseur sensiblement perpendiculaire à la ligne joignant les centres des deux pastilles. La ligne de réduction d'épaisseur est tracée entre les deux pastilles, séparant les deux pastilles. De préférence, la ligne rejoint un bord libre de la pièce, de préférence sensiblement perpendiculairement au bord libre de la pièce.

Avantageusement, la ligne de réduction d'épaisseur s'étend sensiblement suivant une médiatrice du segment joignant les centres des deux pastilles.

On considère que la ligne s'étend suivant la médiatrice si elle coupe le segment à proximité du centre du segment, par exemple sur le tiers central , avantageusement sur le quart central de la longueur du segment, et si la ligne forme avec la direction du segment un angle compris entre 70° et 110°, de préférence compris entre 80° et 100°.

La ligne de réduction d'épaisseur peut par exemple former une entaille linéaire. La section droite de l'entaille peut former un "U" s'ouvrant à l'opposé de la structure support.

La dilatation différentielle entre la bande rebord en polymère et la structure support métallique tend alors à rapprocher les lèvres de l'entaille, et tend à provoquer une déflexion de la bande de bord par pliage le long de la ligne de réduction d'épaisseur.

Une entaille ouverte à l'opposé de la structure support tend à orienter cette déflexion dans le sens d'un placage contre la structure support, des deux portions de bande de bord situées chacune entre une pastille et l'entaille.

L'invention concerne également un véhicule comprenant un bac de stockage formé par une pièce moulée telle que décrite précédemment, la pièce moulée étant assemblée par soudage des pastilles métalliques sur des feuillures métalliques de traverse(s) et de longerons bordant le bac.

Le bac peut être par exemple un bac de stockage d'une roue de secours.

Avantageusement, un mastic et/ou une colle peuvent en être en outre déposé dans l'épaisseur entre la bande rebord de la pièce et les feuillures, entre les zones d'assemblage par pastilles.

Ainsi, le véhicule comporte un cordon de mastic et/ou de colle entre une face d'appui de la pièce moulée sur la structure support, et la structure support. De préférence, le cordon de mastic et/ou de colle s'étend le long d'une ligne sensiblement parallèle à une ligne joignant les centres des pastilles.

Selon un mode de réalisation particulièrement avantageux, le bac comporte :
- un fond de bac,
- une paroi de contour s'étendant vers le haut à partir du fond de bac, de manière à définir, ensemble avec le fond de bac, un volume utile de stockage intérieur au bac,
- un ou plusieurs rebords horizontaux d'assemblage s'étendant radialement à partir du haut de la paroi de contour,
- au moins un rebord vertical d'assemblage, tangent ou confondu au moins localement avec la paroi de contour.

L'invention concerne également un procédé de fabrication d'une structure de caisse de véhicule automobile, le procédé comprenant :
- une étape d'assemblage à une structure support métallique, d'une pièce en matière polymère telle que décrite précédemment,
- suivie d'une étape de passage à une température supérieure à 150°C pendant une durée supérieure à 30 minutes (par exemple une cuisson de cataphorèse) de l'ensemble structure support métallique et pièce polymère.

Selon un mode de réalisation avantageux, le bac comporte une portion arrière sensiblement verticale, dont le bord vertical supérieur comporte des pastilles, et est assemblé, par exemple par soudage, à une doublure de jupe métallique sensiblement verticale. Cette configuration avec bord supérieur arrière sensiblement vertical permet de réduire le porte à faux du véhicule par comparaison à un bord supérieur arrière horizontal. Le bac peut comporter un rebord avant sensiblement horizontal, assemblé par-dessus le plancher arrière partie avant et la traverse de ripage, la traverse de ripage s'étendant transversalement au véhicule entre le bac et un plancher arrière partie avant du véhicule.

Le bac peut comporter en outre deux rebords latéraux sensiblement horizontaux, assemblés par-dessus deux longerons du véhicule s'étendant d'avant en arrière du véhicule à partir de la traverse de ripage.

Cette configuration avec paroi arrière sensiblement verticale permet notamment d'assembler le bac en l'insérant, par le dessus du véhicule, sur une portion de structure de caisse existante, afin de placer le bac dans sa position de montage par rapport à un cadre déjà assemblé et comprenant la traverse de ripage, les deux longerons, et la doublure de jupe.

L'invention concerne également un procédé de fabrication permettant de produire successivement ou simultanément deux modèles voisins de véhicule automobile. Un des modèles de véhicule comprend par exemple un bac en tôle emboutie soudé sur au moins une traverse et sur deux longerons.

Un autre modèle comprend par exemple un bac en matière thermoplastique formant une pièce telle que décrite précédemment, le bac étant assemblé sur une même géométrie de traverse et de longerons.

Une plaque métallique de fermeture supérieure de chaque longeron peut être prévue dans la variante avec bac thermoplastique. Une telle plaque de fermeture peut être soudée au longeron de manière à ce que le longeron fermé forme une poutre à section creuse à contour fermé.

Le bac thermoplastique est ensuite soudé sur les poutres latérales ainsi formées, ainsi que sur au moins le plancher arrière partie avant et une traverse de ripage transversale au véhicule. Dans la variante avec bac en tôle, les rebords métalliques du bac viennent refermer le profil du longeron pour en faire également une poutre à section creuse à contour fermé.

Dans le cas où le bac en tôle comporte un bord venant refermer un profil de la traverse ou des longerons, le bac en matière thermoplastique peut être associé à des tôles de fermeture venant se substituer à la portion de fermeture du bac en tôle.

Avantageusement, les pastilles du bac en matière thermoplastique sont dimensionnées et positionnées de manière à pouvoir être soudées avec les mêmes installations de soudure que le bac en tôle.

La pièce peut typiquement être injectée en matière thermoplastique. La pièce pourrait également être réalisée en matière thermodurcissable, ce qui serait cependant moins avantageux du point de vu du recyclage du véhicule en fin de vie. En outre, la relative souplesse des matières thermoplastiques peut leur permettre de mieux supporter les déformations temporaires induites lors d'une étape de passage à haute température du bac assemblé, tel que par exemple une cuisson de cataphorèse.

Un moule pour fabriquer la pièce, peut typiquement comporter une broche par pastille à positionner dans le moule, la broche étant intégrée au moule du côté face libre de la pièce (face opposé à la structure sur laquelle doit être assemblée la pièce), et venant s'appuyer sur une portion antagoniste de l'empreinte du moule au niveau d'une portion plane de l'empreinte. L'extrémité de la broche ou la broche peut être par exemple magnétique.

Selon un mode de réalisation alternatif, les pastilles peuvent être réalisées en, matériau polymère distinct du matériau polymère formant la structure coque de la pièce, par exemple pour intégrer des pastilles en polymère chargé fibres de verre en vue d'un assemblage type vissage.

Les pastilles peuvent être optimisées suivant les modes de réalisation, pour un assemblage de type soudage, mais alternativement peuvent être conçues pour d'autres méthodes d'assemblages connues, telles que le clinchage, le rivetage, le vissage, le collage.

Quelques buts, caractéristiques et avantages de l'invention apparaîtront à la lecture de la description suivante, donnée uniquement à titre d'exemple non limitatif, et faite en référence aux dessins annexés, sur lesquels :
La figure 1 est une vue schématique éclatée en perspective d'un bac de roue de secours selon l'invention, en présence d'une portion de structure de caisse sur laquelle le bac de roue de secours est conçu pour être assemblé.
La figure 2 est une vue schématique en coupe d'un bac de roue de secours de véhicule automobile selon l'invention, vu en coupe dans un plan vertical parallèle à une direction usuelle d'avancement du véhicule.
La figure 3 est une vue schématique en perspective d'un bac de roue de secours selon l'invention, avant son assemblage sur une structure de caisse automobile.
La figure 4 est une vue schématique en coupe, d'une portion d'un bord d'assemblage d'un bac de roue de secours selon l'invention.
La figure 5 est une représentation schématique en coupe, d'un bord de bac de roue de secours selon l'invention au niveau de son assemblage sur une tôle métallique.
Les figures 6a 6b sont une illustration schématique des déformations possibles d'un bord de bac de roue de secours assemblé sur une traverse métallique, lors d'un passage à haute température.

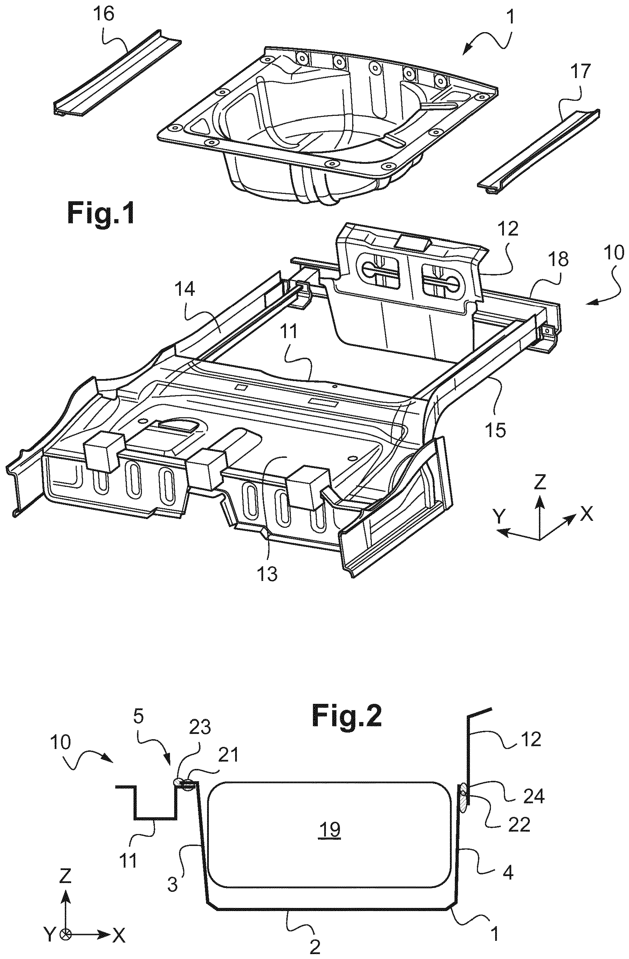

La figure 1 illustre un bac de roue de secours selon l'invention, réalisé par moulage par injection de matière thermoplastique, et configuré pour être assemblé sur une portion 10 de structure de caisse, formant un cadre apte à recevoir des bords d'assemblage du bac 1.

La portion de structure de caisse 10 comprend ici une portion de plancher arrière partie avant 13, derrière laquelle s'étend, sensiblement suivant un axe Y transversal au véhicule, une traverse de ripage 11. Deux longerons 14, 15 s'étendent, à partir de la traverse de ripage et à l'arrière de la traverse de ripage 11,vers l'arrière du véhicule, suivant une direction avant arrière du véhicule correspondant à un axe X du véhicule.

Les longerons 14, 15 peuvent, suivant les modes de réalisation, s'étendre ou non jusqu'en avant de la traverse de ripage 11. Les longerons 14, 15 sont reliés, à leur extrémité arrière, par une traverse arrière 18 s'étendant transversalement au véhicule.

Le véhicule comporte une doublure de jupe arrière 12, qui forme une paroi métallique sensiblement verticale. Dans l'exemple illustré, la doublure de jupe arrière s'étend parallèlement à une traverse arrière 18. La traverse 18 est située au voisinage de la doublure de jupe arrière 12. Les longerons 14, 15 comprennent chacun une portion de poutre à section creuse à contour ouvert, la section initialement à contour ouvert étant fermée respectivement par un élément de fermeture de longeron 16 pour le longeron 14 et un élément de fermeture de longeron 17 pour le longeron 15. Les éléments de fermeture de longeron 16, 17 permettent de former, une fois assemblés sur la structure de poutre ouverte initiale, deux portions de poutre à section creuse à contour fermé.

Le bac de roue de secours 1 comprend quatre bords d'assemblage 5, 6, 7, 44 s'étendant suivant des lignes d'assemblage sensiblement perpendiculaires entre elles, et configurés pour être assemblés respectivement sur le plancher arrière partie avant au droit de la traverse de ripage, sur la doublure de jupe arrière en partie supérieure, et sur les deux éléments de fermeture de longerons.

La figure 2 est une vue schématique en coupe, illustrant le principe d'assemblage du bac 1 sur la portion 10 de structure de caisse. On retrouve sur la figure 2 des éléments communs à la figure 1, les mêmes éléments étant désignés par les mêmes références.

Le bac 1 présente un bord 5 d'assemblage avant, s'étendant dans un plan horizontal, et venant se positionner en appui par-dessus le bord arrière du plancher arrière partie avant, recouvrant lui-même une face supérieure de la traverse 11.

Le bord 5 est ici assemblé par soudage sur le plancher arrière partie avant. Le bord 5 permet de transférer une partie du poids du bac 1 et de son contenu 19, ici une roue de secours, sur la traverse 11. L'assemblage peut se faire par des points de soudure 23, répartis le long du bord de contact 5, et permettant de souder cette portion du bac au plancher arrière partie avant. En outre un cordon 21 de mastic ou de colle d'étanchéité s'étend ici parallèlement à une ligne joignant les points de soudure 23, afin d'assurer une étanchéité entre le bac et la traverse.

La configuration permettant le soudage de la pièce plastique sur le support métallique que représente la traverse est détaillée plus loin.

Afin de conserver un porte à faux court, le bac un comporte une portion verticale de paroi arrière 4, et un bord supérieur vertical 44 de la paroi 4. Sur le bord 44 peut être réalisée une suite de points de soudure 24, permettant de solidariser la paroi arrière 4 du bac avec la doublure de jupe 12 métallique verticale.

Un cordon de mastic ou de colle d'étanchéité 22 peut être déposé parallèlement à une ligne reliant les points de soudure 24, entre la doublure de jupe 12 et la paroi arrière 4.

Cette géométrie du bac peut permettre d'utiliser des installations de soudage conçue initialement pour assembler des bacs de roue de secours en tôle emboutie.

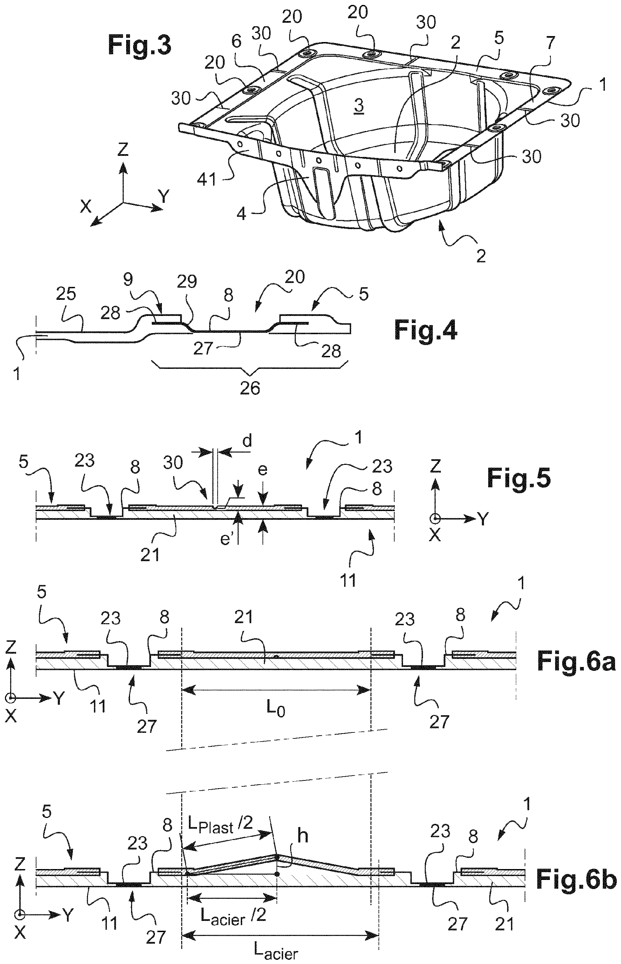

Dans le mode de réalisation illustré, le bac 1 est en outre assemblé sur les longerons 14 et 15 par un rebord droit 7 et un rebord gauche 6 également horizontaux, visibles sur la figure 3, assemblés respectivement sur le longeron 14 et sur le longeron 15, également par une suite de points de soudure et par un cordon d'étanchéité.

La figure 3 est une vue schématique, en perspective, d'une géométrie envisageable pour un bac de roue de secours selon l'invention, injecté en matière thermoplastique. On retrouve sur la figure 3 des éléments communs aux figures précédentes, les mêmes éléments étant désignés par les mêmes références.

Dans le mode de réalisation illustré sur la figure 3, le bac 1 contient un fond 2 à partir duquel s'étend vers le haut, une paroi de contour 3, destinée à définir, ensemble avec le fond 2, un volume utile de stockage intérieur au bac. La paroi de contour 3 est ici sensiblement verticale, de forme globalement cylindrique, mais d'autres géométries sont envisageables en fonction des objets à stocker et de l'espace disponible autour du bac.

En partie supérieure, le bac 1 est délimité par les rebords d'assemblage 5, 6, 7, 44, entourant la paroi de contour 3. Plus généralement, le bac 1 comporte un ou plusieurs rebords horizontaux d'assemblage, et comporte au moins un rebord 44 vertical d'assemblage.

On peut envisager d'autres variantes de réalisation (non représentées), dans lesquels un bac selon l'invention comprendrait uniquement des rebords d'assemblage horizontaux, ou uniquement des rebords d'assemblage obliques ou verticaux.

On peut envisager des variantes de réalisation dans lesquelles un bac selon l'invention serait assemblé sur une structure métallique uniquement par deux bords se faisant face, et non sur tout son pourtour.

Le rebord 44 forme la partie supérieure d'une portion arrière 4 verticale du bac et configuré pour venir s'assembler sur la doublure de jupe 12 visible sur la figure 1.

Tel que visible sur la figure 3, afin de permettre l'assemblage par soudage, les bords d'assemblage 5, 6 et 7, 44 comportent chacun un alignement d'inserts métallique 20, inserts intégrés par surmoulage aux bords d'assemblage du bac. Chaque insert métallique 20, de forme sensiblement circulaire, présente en partie centrale une portion métallique "nue" accessible par ses deux faces pour permettre le soudage de l'insert sur une pièce métallique.. Chaque insert est maintenu à sa périphérie par une double épaisseur de polymère maintenant les deux faces de l'insert autour de la portion centrale "nue". Cette portion périphérique surmoulée de l'insert permet de transférer à l'insert métallique, puis à la structure métallique 10, les efforts et la charge subis par le bac 1.

Le bac peut être injecté en matière thermoplastique, par exemple en polyamide, en polyamide renforcé fibres de verre, en poplyproplylène, en polypropylène renforcé fibres de verre, en polypropylène chargé talc ou en d'autres thermoplastiques connus de l'homme du métier.

On remarque également sur la figure 3, disposée perpendiculairement à une ligne moyenne joignant les inserts 20 d'assemblage, une ligne 30 de réduction d'épaisseur de la membrane formant le bac. Nous désignons par la suite par 'gouge de dilatation' ces lignes 30, qui forment des lignes perpendiculaires à la ligne d'alignement des points de soudure effectués sur les inserts 20.

Suivant ces lignes d'alignement de points de soudure, les dilatations du bac plastique ne peuvent se faire librement, car elles sont contraintes par l'assemblage du bac sur son support métallique. Les gouges 30 sont conçues pour orienter les déformations du bac provoquées par ces dilatations sous contrainte.

Le profil de ces gouges est décrit plus loin.

Pour permettre de mieux comprendre la réalisation et la géométrie du bac 1 au niveau des inserts métalliques de soudage 20, la figure 4 est une vue schématique d'un rebord d'assemblage (par exemple 5, 6, 7, 44) du bac 1, vue en coupe au niveau d'un des inserts métalliques 20. On note le mode d'intégration de l'insert à la pièce, laissant dégagé le centre de l'insert et noyant le contour de l'insert entre deux couches de polymère sensiblement de même épaisseur.

Dans l'exemple illustré, l'insert métallique 20 présente une forme de coupelle métallique 8. La coupelle métallique 8 comportant une paroi 27 de fond, plane, destinée à venir en appui sur une tôle métallique également plane, afin d'être soudée sur cette tôle, qui peut être une tôle de plancher arrière partie avant, une tôle de longeron, une tôle de couverture de longeron, ou un autre type de tôle.

La coupelle métallique 8 comporte des bords de coupelle 28, qui sont surélevées par rapport au fond 8, de manière à pouvoir être surmoulé dans l'épaisseur du bac 1 tout en permettant au fond 8 de venir en contact avec le support métallique sur lequel on souhaite le souder. La coupelle 8 comporte également une paroi oblique 29 joignant le bord de coupelle 28 et le fond 27, cette paroi oblique s'évasant vers la face du rebord d'assemblage destiné à rester libre.

La coupelle 8 est surmoulée par la matière thermoplastique du bac 1, de manière à ce que polymère et métal de la coupelle forment ensemble une surface plane au niveau du fond 27 de la coupelle et autour de ce fond de coupelle.

On facilite ainsi l'accostage du rebord d'assemblage, par exemple du rebord 5 sur le support métallique, en vue de son soudage.

Sur la face du bac 1 destinée à rester libre (destinée à être tournée à l'opposé de la poutre ou à l'opposé du longeron), le surmoulage laisse dégagée une portion centrale de la coupelle, qui comprend une portion de fond 27, et ici au moins une portion de la paroi oblique 29.

De cette manière on dispose d'une surface plane continue pour l'appui sur le support métallique de la traverse ou du longeron, et d'un diamètre d'accès à la coupelle par la face libre du rebord d'assemblage, permettant aux outils de soudage d'accéder à la portion métallique centrale de la coupelle.

On peut envisager des variantes de réalisations (non représentées) dans lesquelles le diamètre "nu" de l'insert est le même sur les deux faces du bac.

On peut envisager des variantes de réalisation (non représentées), dans lesquelles les fonds des coupelles sont en relief par rapport à la surface de la pièce polymère; plusieurs fonds de coupelle voisins étant de préférence alors alignés suivant un même plan. Le fond 27 de la coupelle peut dépasser de la face d'assemblage du rebord 5 ou du rebord concernés, l'appui du rebord sur le support métallique -traverse ou longerons'effectuant alors essentiellement au niveau des coupelles de soudage.

L'insert peut présenter une forme différente d'une coupelle.

De préférence, l'insert est formé par une pastille métallique à contour circulaire, afin de faciliter le positionnement de la pastille dans un moule d'injection de matière plastique. La pastille peut être par exemple maintenue entre une broche, par exemple magnétique et une portion antagoniste de matrice du moule. Une géométrie en coupelle circulaire facilite le centrage de la pastille et évite d'avoir à l'orienter angulairement dans le moule.

Le diamètre non surmoulé de la coupelle est ici plus petit du côté de la face s'appuyant sur le support métallique de soudage, que du coté de l'accès de l'outil de soudage. Ainsi, tout en laissant un accès raisonnable aux outils par la face libre, on évite de trop réduire la surface de polymère "pincée" entre la pastille métallique et la structure support.

La figure 5 illustre de manière très schématique; le principe de réalisation des gouges de dilatation 30, en montrant le bac vu en coupe perpendiculairement à ces gouges. On retrouve sur la figure 5 des éléments communs aux figures précédentes, les mêmes éléments étant désignés par les mêmes références.

Au niveau des zones d'assemblage 5, 6, 7, 44, le bac 1 présente une épaisseur "e" (hors zone de surmoulage des coupelles et hors nervures de renforcement de la pièce).

A l'endroit des gouges de dilatation, l'épaisseur de la pièce est réduite, sur une largeur "d", à une épaisseur inférieure ou égale à une épaisseur "e' ", ceci le long d'une ligne définissant l'axe de la gouge de dilatation.

L'épaisseur "e' " peut être par exemple inférieure ou égale à la moitié de l'épaisseur moyenne "e".

La largeur "d" de la gouge 30 peut être typiquement supérieure ou égale à au moins la moitié de l'épaisseur "e" de la pièce.

Le fond de la gouge 30 peut être avantageusement un fond arrondi en "u". Selon d'autres variantes de réalisation, le fond de la gouge peut être un fond à profil en "v" pour augmenter l'effet de flexion, ou encore un fond à profil plat, pour faciliter la compression du matériau en fond de gouge lors de la dilatation.

Ainsi, lors d'une montée en température du bac 1 en matière thermoplastique assemblé sur une structure métallique, les contraintes de dilatation différentielle créeront une concentration de contraintes au niveau du fond de la gouge 30.

Une partie de la dilatation différentielle entre la pièce et le support peut ainsi être compensée par une compression de la matière formant le fond de la gouge, l'ouverture de la gouge tendant alors à se refermer.

Une autre partie de la dilatation différentielle peut être compensée par une mise en flexion de la pièce thermoplastique, la forme de la gouge étant conçue pour que cette flexion tende à plaquer la pièce thermoplastique contre son support, au lieu de la soulever d'avec son support.

Avantageusement, la gouge peut former une entaille qui s'ouvre vers la face libre de la pièce 1, (le fond de l'entaille étant tourné vers le support métallique).

Les différences de dilatation entre la pièce et le support, à haute température, tendront alors à provoquer une flexion de la pièce thermoplastique plaquant le fond de la gouge contre le support.

Lors de la dilatation de la pièce 1 par rapport à la traverse de ripage 11, la gouge de dilatation 30 telle que représentée sur la figure 5 favorise un plaquage de la pièce 1 par flexion de la pièce 1 au niveau de la gouge 30. Ce plaquage entraîne une compression du mastic d'étanchéité et préserve l'efficacité du cordon d'étanchéité.

On peut envisager des variantes de réalisation dans lesquelles les gouges formant "amincissement " de matière sont remplacées par un évidement de matière, par exemple remplacées par des saignées traversantes, rejoignant ou non le bord libre de la pièce.

Ces saignées traversantes (non représentées) se terminent de préférence par un fond d'entaille arrondi. Elles se terminant par exemple à une distance du bord libre au moins égale à deux fois, avantageusement au moins égal à trois fois la distance maximale entre les contours des coupelles et le bord libre.

Des gouges non traversantes permettent cependant de préserver une bonne étanchéité le long de la ligne d'assemblage entre le bac et le ou les supports métalliques.

De manière plus générale, l'invention propose, pour une pièce en matière polymère contrainte géométriquement par son assemblage à une structure de plus faible coefficient de dilatation que le polymère de la pièce, l'assemblage étant effectué en au moins deux zones de fixation distantes l'une de l'autre (par exemple au niveau des coupelles métalliques, les zones de fixation pouvant revêtir d'autres formes de réalisations, dans d'autres modes de réalisation non illustrés), de ménager sur la pièce en matière polymère, une ligne de plus faible résistance à la compression dans le plan de la pièce et/ou de plus faible résistance à la flexion de la surface de la pièces, la ligne s'étendant perpendiculairement à la direction définie par les deux zones de fixation distantes.

Les figures 6a et 6b, illustrent une mode possible de déformation d'une pièce polymère 1 assemblée à un support métallique 11 par une technique de soudage d'inserts selon l'invention. On retrouve sur ces figures des éléments communs aux figures précédentes, les mêmes éléments étant désignés par les mêmes références.

Sur les figures 6a, 6b, on observe, vu en coupe dans un plan Y Z, un rebord 5 du bac 1 au niveau de son assemblage au plancher arrière partie avant 13. Dans le mode de réalisation illustré, les coupelles 8 sont en appui sur le plancher arrière partie avant 13, à laquelle le fond 27 des coupelles est soudé en des points de soudure 23. Entre les points de soudure 23, formant une ligne légèrement décalée et continue par rapport à la ligne des points de soudure 23, est déposée une ligne 21 de mastic d'étanchéité.

La paroi du rebord 5 thermoplastique est légèrement surélevée, d'une épaisseur remplie localement par le mastic 21, par rapport à la surface supérieure de la traverse de ripage 11.

Les figures 6a, 6b illustrent de manière schématique un profil de déformation susceptible d'être engendré par une montée en température de l'assemblage formée le plancher arrière partie avant 13 métallique et par le bord d'assemblage 5 du bac 1 thermoplastique. Lors d'une montée en température à partir de la configuration de la figure 6a, les points de soudure 23 s'écartent les uns des autres d'une valeur correspondant sensiblement à la dilatation due au coefficient de dilatation de l'acier.

La paroi du rebord 5, réalisée en matière polymère, tend à se dilater et à s'allonger davantage que le support en acier.

Entre les zones de moulage maintenues par les bords des coupelles, elles mêmes maintenues par les points de soudure, l'allongement, en valeur différentielle, de la paroi en matière thermoplastique par rapport au support en acier, provoque des ondulations ou provoque un soulèvement local de la pièce thermoplastique, tel qu'illustré sur la figure 6b. Le recours aux gouges de dilatation 30 permet de localiser et d'orienter ce type de déformation.

L'invention ne se limite pas au type de réalisation décrit et peut se décliner en de nombreuses variantes.

Le bac peut être un bac destiné à un autre usage qu'un stockage de roue de secours. Le principe d'assemblage peut être adopté pour d'autres assemblages de type pièce plastique sur support métallique, que les pièces soient assemblées par leur contour ou par des portions centrales de la pièce.

D'autres procédés que le surmoulage peuvent être envisagés pour intégrer des pastilles ou coupelles métalliques à la pièce polymère à assembler : on peut par exemple prévoir des orifices traversants sur le bord de la pièce, dans lesquels sont insérées après moulage des coupelles métalliques maintenues par clipsage ou sertissage du fait de l'élasticité de la pièce polymère et/ou de la coupelle, et de formes adaptées du contour de l'orifice/de la coupelle. Le surmoulage des coupelles permet cependant une meilleure automatisation du montage et limite le risque de coupelles manquantes au moment de l'opération de soudage.

Dans l'exemple illustré, le bac thermoplastique selon l'invention permet d'alléger le véhicule tout en s'intégrant dans un environnement initialement conçu pour un bac de type tôle soudée emboutie. En outre, le bac thermoplastique peut être intégré à la structure du véhicule au moment de l'assemblage de la caisse ce qui est cohérent avec les process d'assemblage tôlerie installés.

La conception du bac selon l'invention permet donc de produire un véhicule plus léger sur une chaîne d'assemblage initialement conçue pour assembler un véhicule avec bac de roue de secours métallique.

L'invention permet d'assembler, au besoin, deux variantes de véhicules sur la même chaîne de montage.

## Revendications

1. Pièce moulée (1) en matière polymère, la pièce comportant au moins une portion de zone plane d'assemblage (5, 6, 7, 44) destinée à être solidarisée avec une structure support (10), la portion de zone plane d'assemblage (5, 6, 7, 44) comportant une pastille métallique (20, 8) intégrée, dans l'épaisseur de la portion de zone plane d'assemblage (5, 6, 7, 44), de manière à recouvrir la circonférence de la pastille (20, 8) par le matériau polymère de la pièce moulée (1), et de manière à laisser apparente une portion centrale de chacune des deux faces de la pastille (20, 8), **caractérisée en ce que** la pastille (20) présente une forme de coupelle (8), le fond (27) de la coupelle se trouvant dans un même plan, ou se trouvant en relief, par rapport à la surface polymère de la pièce (1) qui maintient la périphérie de la pastille (20).

2. Pièce moulée selon la revendication 1, dont la coupelle (8) comporte un fond d'appui (27) plan, orienté de manière à ce qu'en position d'assemblage de la pièce moulée (1) sur la structure support (10), le fond d'appui plan (27) de la coupelle (8) vienne en appui sur la structure support (10).

3. Pièce moulée selon la revendication 2, dans laquelle, sur sa face opposée à la structure support (10), la coupelle (8) reste dégagée du polymère de la pièce moulée (1) sur un diamètre supérieur ou égal au diamètre du fond d'appui plan (27) de la coupelle (8).

4. Pièce moulée selon l'une quelconque des revendications précédentes, la pièce (1) formant une coque support ou une formant une coque d'habillage, la coque comportant une bande de bord (5, 6, 7, 44) conçue pour être assemblée avec la structure support (10), et la bande de bord (5, 6, 7, 44) comportant au moins deux desdites pastilles métalliques (20, 8).

5. Pièce moulée selon la revendication 4, comportant au moins une bande de bord (5, 6, 7, 44) à laquelle sont intégrées au moins une première et au moins une deuxième desdites pastilles métalliques (20, 8), **caractérisée en ce que** la bande de bord (5, 6, 7, 44) présente une ligne (30) le long de laquelle l'épaisseur de la pièce est amincie, la ligne (30) étant sensiblement perpendiculaire à une droite joignant les centres des deux pastilles (20,8), et la ligne séparant les deux pastilles (20, 8).

6. Pièce moulée selon la revendication 5, dans laquelle la ligne (30) forme une entaille dont la section droite est en forme de "U" s'ouvrant à l'opposé de la face d'appui de la pièce (1) sur la structure support (10).

7. Véhicule comprenant une structure support métallique (10) formée par des traverse(s) (11) et des longerons (14, 15), et comprenant un bac de stockage (1) formé par une pièce moulée selon l'une quelconque des revendications précédentes, la pièce moulée (1) étant assemblée par soudage de plusieurs desdites pastilles métalliques (20, 8) sur les traverses et les longerons.

8. Véhicule selon la revendication 7, dans lequel le bac (1) comporte :
- un fond (2) de bac,
- une paroi de contour (3) s'étendant vers le haut à partir du fond de manière à définir, ensemble avec le fond (2) de bac, un volume utile de stockage intérieur au bac,
- un ou plusieurs rebords horizontaux d'assemblage (5, 6, 7) s'étendant radialement à partir du haut de la paroi de contour,
- au moins un rebord vertical (44) d'assemblage, tangent ou confondu au moins localement avec la paroi de contour (3).

9. Procédé de fabrication d'une structure de caisse de véhicule automobile, comprenant :
- une étape d'assemblage à une structure support métallique (10) appartenant à la structure de caisse, d'une pièce en matière polymère (1) selon l'une quelconque des revendications 1 à 6,
- ladite étape étant suivie d'une étape de passage à une température supérieure à 150°C pendant une durée supérieure à 30 minutes d'un ensemble comprenant la structure support métallique (10) et comprenant la pièce en matière polymère (1) assemblée à la structure support métallique (10).

## Patentansprüche

1. Formteil (1) aus Polymermaterial, wobei das Teil mindestens einen ebenen Montagebereichsabschnitt (5, 6, 7, 44) beinhaltet, der dazu bestimmt ist, mit einer Halterungsstruktur (10) fest verbunden zu werden, wobei der ebene Montagebereichsabschnitt (5, 6, 7, 44) ein integriertes Metallplättchen (20, 8), in der Dicke des ebenen Montagebereichsabschnitts (5, 6, 7, 44), beinhaltet, so dass der Umfang des Plättchen (20, 8) durch das Polymermaterial des Formteils (1) überdeckt wird, und so, dass ein zentraler Abschnitt jeder der beiden Seiten des Plättchens (20, 8) sichtbar gelassen wird, **dadurch gekennzeichnet, dass** das Plättchen (20) eine Napfform (8) aufweist, wobei sich der Boden (27) des Napfes in Bezug auf die Polymeroberfläche des Teils (1), das den Rand des Plättchens (20) hält, in derselben Ebene befindet oder erhaben ist.

2. Formteil nach Anspruch 1, dessen Napf (8) einen ebenen Auflageboden (27) beinhaltet, der so ausgerichtet ist, dass in der Montageposition des Formteils (1) auf der Halterungsstruktur (10) der ebene Auflageboden (27) des Napfes (8) auf der Halterungsstruktur (10) aufliegt.

3. Formteil nach Anspruch 2, bei dem, auf seiner zur Halterungsstruktur (10) entgegengesetzten Seite, der Napf (8) vom Polymer des Formteils (1) über einen Durchmesser freigelegt bleibt, der größer oder gleich dem Durchmesser des ebenen Auflagebodens (27) des Napfes (8) ist.

4. Formteil nach einem der vorhergehenden Ansprüche, wobei das Teil (1) eine Halterungsschale bildet oder eine Verkleidungsschale bildet, wobei die Schale einen Randstreifen (5, 6, 7, 44) beinhaltet, der dazu konzipiert ist, mit der Halterungsstruktur (10) montiert zu werden, und wobei der Randstreifen (5, 6, 7, 44) mindestens zwei der Metallplättchen (20, 8) beinhaltet.

5. Formteil nach Anspruch 4, beinhaltend mindestens einen Randstreifen (5, 6, 7, 44), in den mindestens ein erstes und mindestens ein zweites der Metallplättchen (20, 8) integriert sind, **dadurch gekennzeichnet, dass** der Randstreifen (5, 6, 7, 44) eine Linie (30) aufweist, entlang der die Dicke des Teils dünner ist, wobei die Linie (30) im Wesentlichen senkrecht zu einer Geraden ist, die die Mittelpunkte der beiden Plättchen (20, 8) verbindet, und wobei die Linie die beiden Plättchen (20, 8) trennt.

6. Formteil nach Anspruch 5, wobei die Linie (30) eine Kerbe bildet, deren Querschnitt die Form eines "U" hat, das sich entgegengesetzt zur Auflageseite des Teils (1) auf der Halterungsstruktur (10) öffnet.

7. Fahrzeug, das eine metallene Halterungsstruktur (10) umfasst, die durch Querträger (11) und Längsträger (14, 15) gebildet wird, und eine Lagerwanne (1) umfasst, die durch ein Formteil nach einem der vorhergehenden Ansprüche gebildet wird, wobei das Formteil (1) durch Schweißen von mehreren der Metallplättchen (20, 8) auf die Querträger und die Längsträger montiert wird.

8. Fahrzeug nach Anspruch 7, wobei die Wanne (1) beinhaltet:
- einen Wannenboden (2),
- eine Begrenzungswand (3), die sich vom Boden aus nach oben hin erstreckt, so dass sie gemeinsam mit dem Wannenboden (2) ein Lagernutzvolumen innerhalb der Wanne definiert,
- eine oder mehrere horizontale Montageeinfassungen (5, 6, 7), die sich von der Oberseite der Begrenzungswand aus radial erstrecken,
- mindestens eine vertikale Montageeinfassung (44), die die Begrenzungswand (3) tangiert oder zumindest lokal mit ihr zusammenfällt.

9. Verfahren zur Herstellung einer Kraftfahrzeugkarosseriestruktur, umfassend:
- einen Schritt des Montierens eines Teils aus Polymermaterial (1) nach einem der Ansprüche 1 bis 6 an eine metallene Halterungsstruktur (10), die zur Karosseriestruktur gehört,
- wobei auf den Schritt ein Schritt des Bringens auf eine Temperatur über 150 °C während einer Dauer von mehr als 30 Minuten einer Anordnung folgt, die die metallene Halterungsstruktur (10) umfasst und das an die metallene Halterungsstruktur (10) montierte Teil aus Polymermaterial (1) umfasst.

## Claims

1. Moulded part (1) made of polymer material, the part comprising at least one planar assembly region portion (5, 6, 7, 44) that is intended to be secured to a support structure (10), the planar assembly region portion (5, 6, 7, 44) comprising a metal disc (20, 8) that is integrated, in the thickness of the planar assembly region portion (5, 6, 7, 44), such that the circumference of the disc (20, 8) is covered by the polymer material of the moulded part (1), and such that a central portion of each one of the two faces of the disc (20, 8) is left visible, **characterized in that** the disc (20) is in the form of a dish (8), the bottom (27) of the dish being coplanar, or in relief, relative to the polymer surface of the part (1) which holds the periphery of the disc (20).

2. Moulded part according to Claim 1, whose dish (8) comprises a planar contact base (27) which is oriented in such a way that, in the position of assembly of the moulded part (1) on the support structure (10), the planar contact base (27) of the dish (8) comes to press against the support structure (10) .

3. Moulded part according to Claim 2, wherein, on its face opposite the support structure (10), the dish (8) remains set apart from the polymer of the moulded part (1) on a diameter greater than or equal to the diameter of the planar contact base (27) of the dish (8) .

4. Moulded part according to any one of the preceding claims, the part (1) forming a support shell or forming a trim shell, the shell comprising an edge strip (5, 6, 7, 44) that is designed to be joined to the support structure (10), and the edge strip (5, 6, 7, 44) comprising at least two of said metal discs (20, 8).

5. Moulded part according to Claim 4, comprising at least one edge strip (5 6, 7, 44) in which at least one first and at least one second of said metal discs (20, 8) are integrated, **characterized in that** the edge strip (5, 6, 7, 44) has a line (30) along which the thickness of the part is reduced, the line (30) being substantially perpendicular to a straight line linking the centres of the two discs (20, 8), and the line separating the two discs (20, 8).

6. Moulded part according to Claim 5, wherein the line (30) forms a notch having a cross section in the shape of a U that is open away from the contact face of the part (1) on the support structure (10).

7. Vehicle comprising a metal support structure (10) formed by crossmembers (11) and stringers (14, 15), and comprising a storage trough (1) formed by a moulded part according to any one of the preceding claims, the moulded part (1) being assembled by welding several of said metal discs (20, 8) to the crossmembers and the stringers.

8. Vehicle according to 7, wherein the trough (1) comprises:
- a trough bottom (2),
- a contour wall (3) extending upwards from the bottom so as to define, together with the trough bottom (2), a useful storage volume inside the trough,
- one or more horizontal assembly rims (5, 6, 7) extending radially from the top of the contour wall,
- at least one vertical assembly rim (44), which at least locally is tangential to or coincides with the contour wall (3).

9. Method for manufacturing a motor vehicle body structure, comprising:
- a step of fitting, to a metal support structure (10) belonging to the body structure, a polymer material part (1) according to any one of Claims 1 to 6,
- said step being followed by a step of subjecting an assembly, comprising the metal support structure (10) and comprising the polymer material part (1) fitted to the metal support structure (10), to an upper temperature of 150°C for a duration of greater than 30 minutes.
